# EUROPEAN PATENT SPECIFICATION

(11) **EP 3 572 682 B1**
(45) Date of publication and mention of the grant of the patent: **22.12.2021**
(21) Application number: 19171018.5
(22) Date of filing: 25.04.2019
(51) Int. Cl.: F16D 3/38

(54) **A YOKE SHAFT FOR CARDAN SHAFT EMBODIMENTS**
JOCHWELLE FÜR KARDANWELLENAUSFÜHRUNGEN
ARBRE DE FOURCHE POUR REPRÉSENTATIONS D'ARBRE À CARDAN

(30) Priority: 24.05.2018 TR 201807402
(43) Date of publication of application: 27.11.2019
(73) Proprietor: Tirsan Kardan Sanayi Ve Ticaret Anonim Sirketi, Yunusemre - Manisa (TR)
(72) Inventor: DAVAZLI, SEBAHATTiN, MANISA (TR)
(74) Representative: Yamankaradeniz, Kemal

(56) References cited:
- EP-A1- 3 135 939
- WO-A2-2008/057060
- DE-A1- 2 849 541

## Description

### TECHNICAL FIELD

Invention which is in applications of the cardan shaft relates to yoke shaft touching surface of cardan shaft and increase in strength of the part and making it lighter.

### STATE OF THE ART

In the current related art, cardan shaft located between gearbox output shaft and differential is used to transmit of power generated in engine in motor vehicles to differential by rotating motion. As known, cardan shafts comprises many parts. Two of said parts are yoke shaft and tube sleeve. Yoke shaft and tube sleeve are cardan shaft unit components that are working mutual to each other simultaneously. Yoke shaft has male spline form in outer diameter while tube sleeve has female spline form of inner diameter. Completing each other mutually, the spline form provides transmit of torque from the engine.

State of art applications include EP3135939 A1, WO 2008/057060 A2 and DE2849541 A1 which include improvements to the operating performance of the propeller shafts. EP3135939 A1 discloses an outer seal assembly developed for the propeller shaft sliding assembly. The outer seal assembly of the present invention consists of a support sheet and a peel lip which adapts to the neck region of the fork sliding shaft to provide the sealing function. The outer seal configuration is a thicker seal than the inner seal present in the propeller shaft sliding assembly. Thickness of the outer felt assembly minimizes the effect of outdoor conditions and extends the service life of the inner felt. With this application, the sealing is improved in the propeller shaft sliding assembly. Although the invention is an embodiment associated with propeller shafts in this respect, it does not include an improvement for solving the problems mentioned in detail below.

Document WO 2008/057060 A2 disclose a cardan shaft comprising: a yoke shaft a tube sleeve (13) and a protective cover.The yoke shaft consisting of: a yoke part, a shaft part and a neck section which comprises a protective cover insertion diameter on which the protective cover is mounted, a solid cone, a turning point and a neck having a diameter smaller than the diameter of the shaft part. Said tube sleeve having at one end a tube face and a tube inner chamfer

DE2849541 A1 relates to a propeller shaft configuration having an inner shaft and an outer shaft and grooves arranged on the inner shaft. By changing the diameter of the inner shaft and the diameter value formed by the grooves configured thereon, the new propeller shaft construction is made more durable than the propeller shafts of the prior art and also its weight is reduced. With this application, the structural components of the propeller shaft have been modified to increase the strength. In this respect, the invention provides for increasing the strength and strength of the structure in the propeller shafts. However, the propeller shaft does not include a change in the neck region and does not include an improvement to solve the problems discussed in detail below.

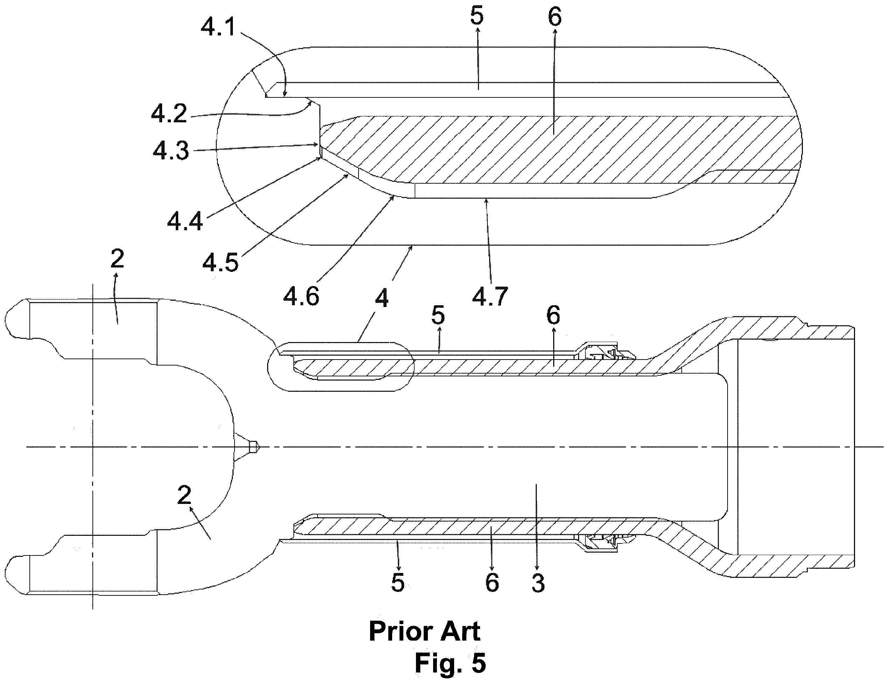

Yoke shaft (1) comprises yoke part (2) on one side and shaft part (3) on the other side. neck section (4) corresponding to the section where yoke part (2) and shaft part (3) meet contains sections where sliding shaft case (5) is mounted and tube sleeve (6) contacts. Figure 5 shows cross-sectional view of side profile of former embodiment of the neck section (4) of yoke shaft (1). In the related art the neck section (4) contains protective cover insertion diameter (4.1), chamfer (4.2), touching face (4.3), cone upper end point (4.4), cone section (4.5), neck turning point (4.6) and neck (4.7). As more clearly seen in detailed view in figure 5, neck section (4) has a considerable complex form and tube sleeve (6) tube face (6.1) contacts touching face (4.3) of yoke shaft (1). Protective cover (5) is mounted on protective cover insertion diameter (4.1). Yoke part (2) descends in diameter toward neck (4.7) with the slope that chamfer(4.2) and cone section (4.5) have.

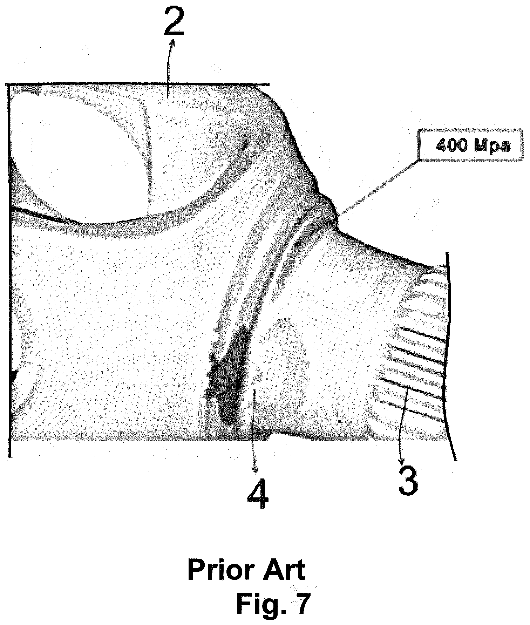

In figure 7 shows view of computer aid (CAE) analysis study of prior art neck section (4) embodiment of yoke shaft (1). As seen from figure 7, according to analysis study made therein, in present neck section (4) design tensions occur mostly in the area located between cone upper end point (4.4), cone section (4.5) and neck turning point (4.6).

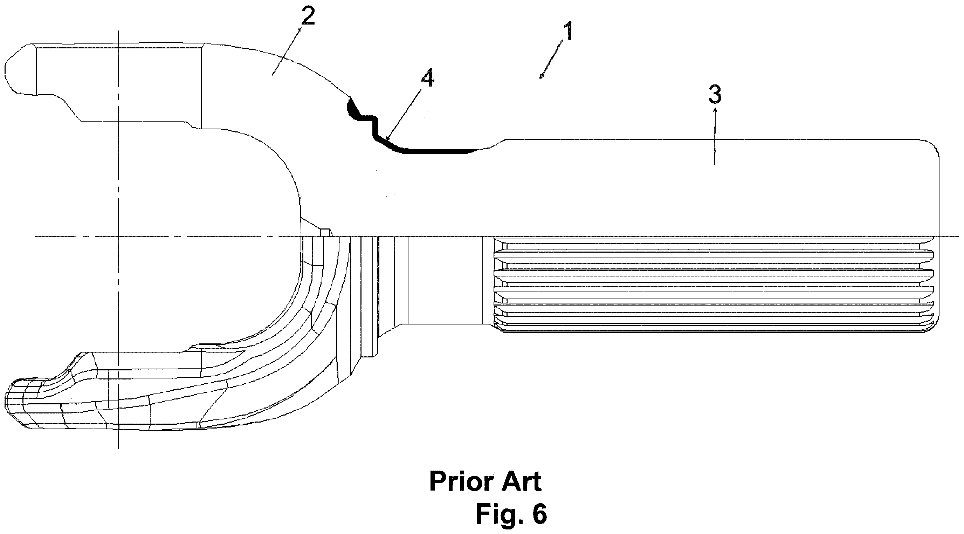

In order to obtain more strength and carrying capacity in the area remaining between neck turning point (4.6) cone section (4.5), cone upper end point (4.4) of yoke shaft (1) in prior art, deep thermal process (induction) is conducted in neck section (4) and neck (4.7) diameter is increased. In Figure 6 neck section (4) wherein induction is applied in prior art of yoke shaft (1) is shown. As known induction application generates heat at high frequency at a certain thickness in a certain area of the part without contacting the part by means of electric current and bobbins, and is subjected to cooling immediately and related area is giving hardness and thus it is a strength increasing process. Because of requiring an extra process and electric consumption, the processing and production cost of part increases and is a processing way for providing part with strength. As seen in figure 6, a certain thickness is applied to areas wherein tensions are the most in the prior art of neck section (4) or carrying capacity of part is desired to be increased.

Some disadvantages caused by induction process and increasing part thickness are as follows.
- Because longer time is needed in machining counters, less production can be made in unit of time.
- Energy costs increase because of induction process
- Shipment cost of parts increase because of extra induction process.
- Coolant liquid use increases in induction process.
- Chemical wastes increase.
- Destruction cost of chemical wastes increases.
- Part weight increases in case neck diameter increases.
- In case neck diameter increases amount of material during preheating in forging.
- Since additional material is required for increasing neck diameter, heated material before forging increases the period of staying in furnace.
- Weight increase arising due to increase in neck diameter makes shipment difficult.
- Unit and energy costs per part increases

In conclusion, developments have been made in yoke shaft embodiment and, therefore, new embodiments eliminating the above disadvantages in yoke shaft neck section and offering solutions to existing systems are needed.

### PURPOSE OF THE INVENTION

The present invention relates to a cardan shaft as defined in claim 1, eliminating all disadvantages and providing some additional advantages.

Main purpose of the invention is to change the embodiment of neck section where yoke shaft yoke part and shaft part join and obtain a simpler, strengthened and lighter embodiment.

Another purpose of the invention is to eliminate the induction process requirement in yoke shaft production and thus conduct more serial and low cost production.

A further purpose of the invention is to reduce throttle diameter, make the yoke shaft lighter and thus save in items such as materials and production processes, time of keeping in furnace, transportation process.

Another purpose of the invention is to reduce unit and energy costs per part. In order to achieve all advantages mentioned above and to be understood better with the detailed description given below, the invention relates to neck section embodiment of yoke shaft where yoke part and shaft part meet and comprising;
- A solid cone form wherein protective cover in neck section is fixed, narrowing at a certain inclination between protective cover insertion diameter and neck section and extending in conic form and restricting tube sleeve on its slope body,
- Mating surface area wherein tube sleeve contacts lower tube face on said solid cone and is restricted.

The structural and characteristics features of the invention and all advantages will be understood better in detailed descriptions with the figures given below and with reference to the figures, and therefore, the assessment should be made taking into account the said figures and detailed explanations.

### BRIEF DESCRIPTION OF FIGURES

In order to make the embodiment and additional members being subject of the present invention as well as the advantages clearer for better understanding, it should be assessed with reference to the following described figures.
- **Figure 1**: **;** Side profile cross-section view of yoke shaft with strengthened neck section of the invention
- **Figure 2**: **;** View of computer assisted analysis study on yoke shaft with strengthened neck section disclosed hereunder.

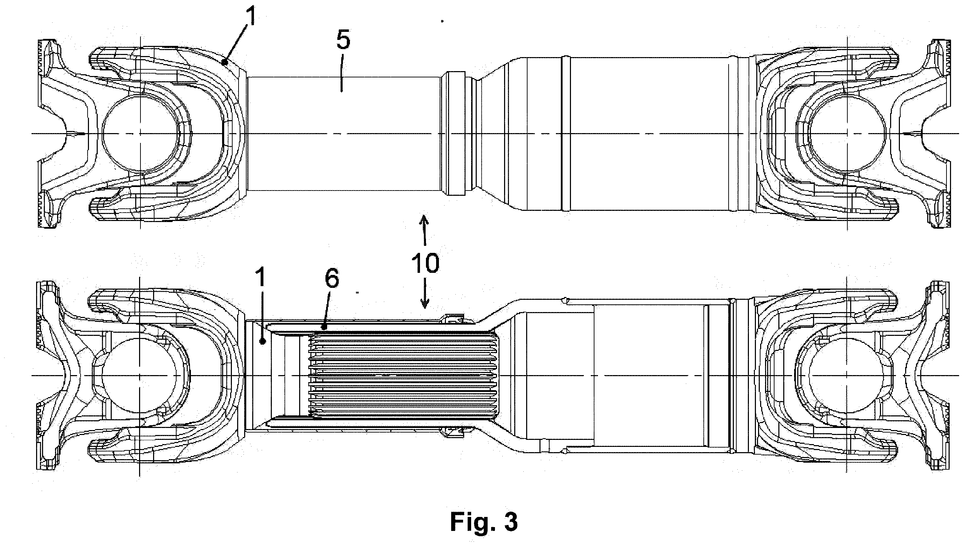

- **Figure 3**: **;** Views of yoke shaft on complete cardan shaft with strengthened neck section disclosed under the invention
- **Figure 4**: **;** View of form of tube sleeve's resting on yoke shaft neck section.
- **Figure 5**: **;** Side profile cross-section view of yoke shaft and neck section of prior art.
- **Figure 6**: **;** View of area wherein induction is conducted in neck section of yoke shaft neck section in prior art.
- **Figure 7**: **;** View of computer assisted analysis study of yoke shaft neck section of prior art.

### REFERENCE NUMBERS

- **1.**: Yoke shaft
- **2.**: Yoke part
- **3.**: Shaft Part
- **4.**: Neck section
- **4.1.**: Protective cover insertion diameter
- **4.2.**: Chamfer
- **4.3.**: Touching face
- **4.4.**: Cone upper end point
- **4.5.**: Cone section
- **4.6.**: Neck turning point
- **4.7.**: Neck
- **4.8.**: Solid cone
- **4.9.**: Mating surface
- **5.**: Protective cover
- **6.**: Tube sleeve
- **6.1.**: Tube face
- **6.2.**: Tube inner chamfer
- **10.**: Cardan shaft

### DETAILED DESCRIPTION OF THE INVENTION

In this detailed description, the preferred embodiments of the invention have been described in a manner not forming any restrictive effect and only for purpose of better understanding of the matter.

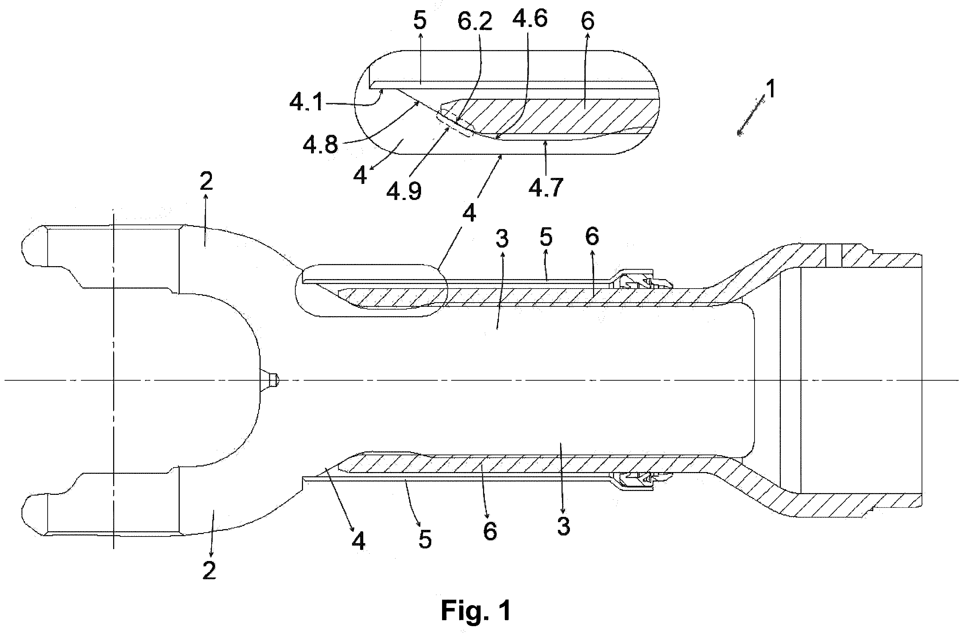

The invention relates to a development in a yoke shaft (1) of a cardan shaft (10) used for vehicle moving upon transmitting engine rotational motion and power to differential in motor vehicles. Invention particularly relates to strengthening a neck section (4) of the yoke shaft (1) in the cardan shaft (10) providing transmit of power between differential and gearbox and thus providing higher strength and carrying capacity in motor vehicles. Figure 1 is side profile cross-section view of strengthened the neck section (4) of the yoke shaft (1) disclosed under the invention. According to this, the yoke shaft (1) basically consists of a yoke part (2), a shaft part (3) and the neck section (4) corresponding to the part where the yoke part (2) and the shaft part (3) meet. The development disclosed under the invention is in the neck section (4) of yoke shaft (1). As seen in figure 1, the neck section (4) comprises respectively, a protective cover insertion diameter (4.1) wherein a protective cover (5) is mounted, an solid cone (4.8) narrowing certain inclination inwardly from said the protective cover insertion diameter (4.1) and joining with a neck (4.7), a mating surface (4.9) contact on the said the solid cone (4.8) whereon a tube inner chamfer (6.2) of tube sleeve (6), a neck turning point (4.6) corresponding to passing point between the neck (4.7) and the mating surface (4.9) end part and the neck (4.7) having a certain diameter.

Development disclosed under the invention is the simplification of embodiment between the protective cover insertion diameter (4.1) and the neck (4.7), and embodiment comprise of the solid cone (4.8) in conic form of this part and the mating surface (4.9) on said the solid cone (4.8). Thus a chamfer (4.2) of the yoke shaft (1) neck section (4) of prior art (figure 5), a touching face (4.3), a cone upper end point (4.4) forms are eliminated and a simpler and more durable structure is achieved with the solid cone (4.8) form in the neck section (4) as shown in figure 1.

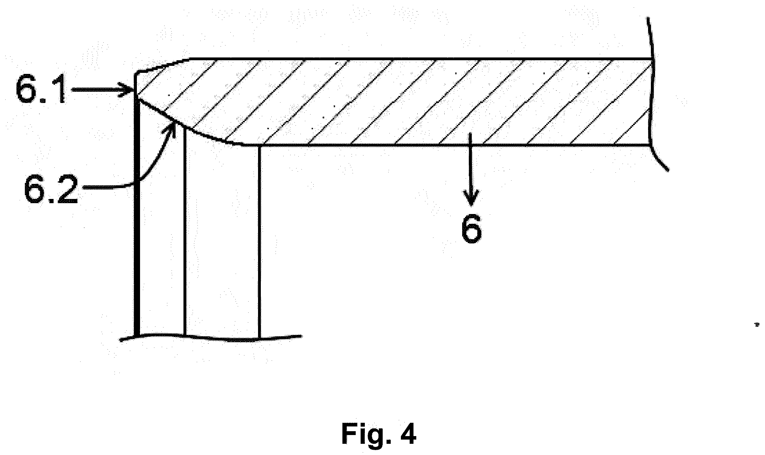

Figure 4 is a cross-section view showing a tube face (6.1) where the yoke shaft (1) contact the tube sleeve (6) and the tube inner chamfer (6.2). Since vertical forms are eliminated in the neck section (4) embodiment of the invention, the tube sleeve (6) head contacts the lower tube inner chamfer (6.2) the yoke shaft (1) instead of the tube face (6.1). The lower tube inner chamfer (6.2) of tube sleeve is limited by the mating surface (4.9) of the yoke shaft (1). For achievement of this, it comprises of the mating surface (4.9) having a certain inclination and the solid cone (4.8) extending between the protective cover insertion diameter (4.1) and the neck section (4.7).

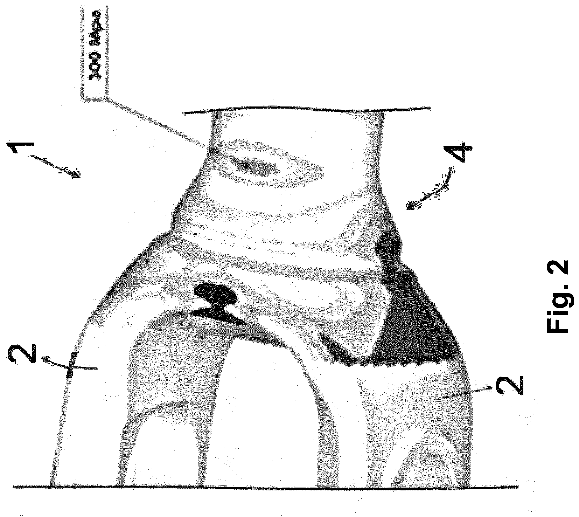

The yoke shaft (1) embodiment disclosed under the invention provides a higher strength thanks to the neck section (4) given form as described above and tension amount in the neck section (4) is reduced and strength is increased as seen from result of computer assisted (CAE) analysis study indicated in figure 2. Thus it is allowed to produce the neck (4.7) in shorter diameter. Since this case provides lighter the yoke shaft (1), saving is provided in items such as material and time of keeping in furnace in production processes and transportation.

## Claims

1. A cardan shaft (10) for transmitting engine rotational motion and power in motor vehicles, said cardan shaft (10) comprising: a yoke shaft (1) a tube sleeve (6) and a protective cover (5);
said yoke shaft (1) consisting of: a yoke part (2), a shaft part (3) and a neck section (4); said neck section (4) corresponding to the part where the yoke part (2) and the shaft part (3) meet;
wherein said neck section (4) consists of:
a protective cover insertion diameter (4.1) on which the protective cover (5) is mounted, said protective cover insertion diameter (4.1) being parallel to the yoke shaft axis;
a solid cone (4.8), a turning point (4.6) and a neck (4.7) having a diameter smaller than the diameter of the shaft part (3);
wherein said solid cone (4.8) narrows with a certain inclination inwardly from said protective cover insertion diameter (4.1) and joins said neck (4.7) at said turning point (4.6);
said tube sleeve (6) having at one end a tube face (6.1) and a tube inner chamfer (6.2);
wherein, only said tube inner chamfer (6.2) contacts said neck section (4), defining a mating surface (4.9) thereon; said mating surface (4.9) being exclusively on said solid cone (4.8).

## Patentansprüche

1. Kardanwelle (10) zum Übertragen von Motordrehbewegung und Leistung in Kraftfahrzeugen, wobei die Kardanwelle (10) umfasst: eine Jochwelle (1), eine Rohrhülse (6) und eine Schutzabdeckung (5);
wobei die Jochwelle (1) aus Folgendem besteht: einem Jochteil (2), einem Wellenteil (3) und einem Halsabschnitt (4); wobei der Halsabschnitt (4) dem Teil entspricht, an dem sich der Jochteil (2) und der Wellenteil (3) treffen;
wobei der Halsabschnitt (4) aus Folgendem besteht:
einem Schutzabdeckungs-Einführdurchmesser (4.1), auf dem die Schutzabdeckung (5) angebracht ist, wobei der Schutzabdeckungs-Einführdurchmesser (4.1) parallel zu der Jochwellenachse verläuft;
einem Vollkegel (4.8), einem Wendepunkt (4.6) und einem Hals (4.7) mit einem Durchmesser, der kleiner als der Durchmesser des Wellenteils (3) ist;
wobei sich der Vollkegel (4.8) mit einer gewissen Neigung nach innen von dem Schutzabdeckungs-Einführdurchmesser (4.1) verjüngt und an den Hals (4.7) an dem Wendepunkt (4.6) anschließt;
wobei die Rohrhülse (6) an einem Ende eine Rohrstirnfläche (6.1) und eine Rohrinnenfase (6.2) aufweist;
wobei nur die Rohrinnenfase (6.2) den Halsabschnitt (4) berührt und darauf eine Passfläche (4.9) definiert; wobei sich die Passfläche (4.9) ausschließlich auf dem Vollkegel (4.8) befindet.

## Revendications

1. Arbre à cardan (10) pour transmettre le mouvement de rotation et la puissance d'un moteur dans des véhicules à moteur, ledit arbre à cardan (10) comprenant :
un arbre de culasse (1) un manchon tubulaire (6) et un couvercle de protection (5) ;
ledit arbre de culasse (1) se composant de : une partie de culasse (2), une partie d'arbre (3) et une section de col (4) ; ladite section de col (4) correspondant à la partie où la partie de culasse (2) et la partie d'arbre (3) se rencontrent ;
dans lequel ladite section de col (4) se compose de :
un diamètre d'insertion de couvercle de protection (4.1) sur lequel le couvercle de protection (5) est monté, ledit diamètre d'insertion de couvercle de protection (4.1) étant parallèle à l'axe de l'arbre de culasse ;
un cône plein (4.8), un point tournant (4.6) et un col (4.7) ayant un diamètre inférieur au diamètre de la partie d'arbre (3) ;
dans lequel ledit cône plein (4.8) se rétrécit avec une certaine inclinaison vers l'intérieur à partir dudit diamètre d'insertion du couvercle de protection (4.1) et rejoint ledit col (4.7) audit point tournant (4.6) ;
ledit manchon tubulaire (6) ayant à une extrémité une face de tube (6.1) et un chanfrein intérieur de tube (6.2) ;
dans lequel, seul ledit chanfrein intérieur de tube (6.2) est en contact avec ladite section de col (4), définissant une surface d'accouplement (4.9) sur celui-ci ; ladite surface d'accouplement (4.9) étant exclusivement sur ledit cône plein (4.8).
